Europäisches Patentamt

(19) European Patent Office

Office européen des brevets

(11) EP 0 699 113 B1

## (12) FASCICULE DE BREVET EUROPEEN

(45) Date de publication et mention
de la délivrance du brevet:
**01.10.1997 Bulletin 1997/40**

(21) Numéro de dépôt: **94920860.7**

(22) Date de dépôt: **25.07.1994**

(51) Int. Cl.$^6$: **B23D 57/00**, B28D 1/08

(86) Numéro de dépôt international:
**PCT/BE94/00046**

(87) Numéro de publication internationale:
**WO 95/03147 (02.02.1995 Gazette 1995/06)**

(54) **PROCEDE ET DISPOSITIF DE COMMANDE D'UN CABLE OU FIL, EN PARTICULIER DIAMANTE, POUR LA COUPE DANS DES BLOCS**

VERFAHREN UND VORRICHTUNG ZUM STEUERN EINES SÄGEDRAHTES ODER SÄGEKABELS

METHOD AND DEVICE FOR CONTROLLING A CABLE OR WIRE, PARTICULARLY DIAMOND CHARGED FOR CUTTING BLOCKS

(84) Etats contractants désignés:
**AT BE CH DE DK ES FR GB GR IE IT LI LU MC NL PT SE**

(30) Priorité: **23.07.1993 BE 9300773**

(43) Date de publication de la demande:
**06.03.1996 Bulletin 1996/10**

(73) Titulaire: **DIAMANT BOART Société Anonyme 1190 Bruxelles (BE)**

(72) Inventeur: **WHITEHEAD, James B-1150 Woluwé-Saint-Pierre (BE)**

(74) Mandataire: **Claeys, Pierre et al GEVERS Patents, Brussels Airport Business Park, Holidaystraat 5 1831 Diegem (BE)**

(56) Documents cités:
DE-B- 1 236 396                FR-A- 2 655 904
US-A- 4 067 312                US-A- 5 176 055

• **PATENT ABSTRACTS OF JAPAN vol. 11, no. 134 (P-571) 28 Avril 1987 & JP,A,61 274 203 (KOMATSU LTD) 4 Décembre 1986**

## Description

La présente invention concerne un procédé de commande d'un câble ou fil de coupe dans une machine de coupe, en particulier d'un câble diamanté pour la coupe dans des blocs, notamment en pierre naturelle, le câble diamanté comportant, répartis et fixés le long de son axe longitudinal, des manchons diamantés qui assurent la coupe le procédé comprenant une mise en circulation du câble diamanté sous la forme d'une boucle sans fin.

Un procédé de ce genre est connu par la FR-A-2.655.904 selon laquelle le câble est en plus soumis à un mouvement de déplacement latéral alternatif suivant une direction ayant au moins une composante perpendiculaire au plan de coupe dans un but d'animer le câble d'une rotation sur lui-même autour de son axe. Aucun moyen n'est prévu dans ce document pour détecter et/ou mesurer cette rotation et pour agir sur le câble en fonction de la détection et/ou mesure de manière à provoquer une rotation souhaitée.

On connaît des câbles diamantés de ce genre dans lesquels les manchons diamantés sont fixés au câble par exemple par une matière injectée, telle que de la matière plastique, ou par une matière vulcanisée, comme du caoutchouc. Un câble de ce genre circule généralement en boucle fermée (sans fin) dans ce type de machine, sur au moins deux poulies de grand diamètre situées de part et d'autres du bloc que l'on souhaite couper par exemple en plaques.

On a constaté que l'usure des manchons diamantés de ce câble en cours de coupe se répartit de façon irrégulière sur le pourtour des manchons et que généralement une usure en méplat ou par ovalisation a lieu. De ce fait, si les manchons sont cylindriques, ils perdent leur symétrie de rotation et n'ont plus la possibilité de présenter automatiquement pour la coupe une autre partie de leur pourtour. On constate en effet qu'avec un nouveau câble sortant de fabrication, les manchons cylindriques et le câble peuvent avoir une tendance à tourner sur eux-mêmes autour de leur axe longitudinal, en particulier dans le brin tendu (de coupe) et dans le brin mou (de retour) entre les deux poulies. Cependant, avec le temps, l'usure forme ces méplats ou ovalisations et le câble et les manchons arrivent rapidement à ne plus tourner autour de leur axe longitudinal mais à s'user continuellement au même endroit. On doit alors rebuter tout le câble et ses manchons alors qu'une surface périphérique importante de ceux-ci est encore garnie de diamant mais ne peut pas être mise en service à cause de la tendance du câble et des manchons à remettre automatiquement les méplats ou ovalisations en contact avec le bloc à couper, en raison de la loi du plus court chemin recherché par le câble tendu, au moins en cours de coupe. La rentabilité du câble diamanté ainsi utilisé est très faible.

Dans le cas de manchons à section transversale polygonale, on constate aussi une usure non contrôlée plus grande de certaines faces latérales par rapport à d'autres, à la suite d'une absence de contrôle et de commande de rotation du câble et des manchons autour de leur axe longitudinal. Ici aussi la rentabilité du câble de ce genre est très faible.

On constate donc que, dans les deux types de manchons, d'une part, polygonaux et, d'autre part, cylindriques, il est nécessaire de commander positivement ladite rotation pour commander une usure régulièrement répartie, soit par exemple en empêchant et/ou en réalisant de façon commandée cette rotation pour des manchons polygonaux, soit par exemple en commandant une rotation sensiblement constante et régulière des manchons cylindriques.

A cet effet, le procédé, suivant l'invention, comporte un détermination sur le câble diamanté d'au moins une direction passant à travers ce dernier et fixe par rapport à lui et d'un sens déterminé sur cette direction, une localisation dans l'espace de ladite direction transversale et du sens déterminé, à un moment donné, lors de leur passage par au moins une zone de mesure, une comparaison des direction transversale et sens déterminé localisés avec une direction transversale et un sens déterminé de référence, et une modification éventuelle, en fonction de la comparaison de la direction transversale et/ou du sens déterminé.

L'invention concerne aussi un dispositif pour la mise en oeuvre du procédé de commande de l'invention selon le préambule de la revendication 16.

Ledit dispositif de l'invention comporte une machine de coupe précitée et sa commande, connues par exemple par la FR-A-2.655.904 précitée.

Suivant l'invention, ledit dispositif comporte en outre, pour la détermination des direction et sens transversaux, éventuellement radiaux, fixes sur le câble, un élément aimanté dont la distribution spatiale du champ magnétique est connue et présente des direction et sens particuliers fixes, l'élément aimanté étant fixé au câble pour que les direction et sens particuliers de son champ magnétique soient associés aux direction et sens transversaux susdits, et pour la mesure du champ magnétique produit par l'élément aimanté, en des endroits de mesure situés dans la zone de mesure susdite, chaque fois au moins un détecteur d'induction magnétique résultant du champ susdit, le détecteur présentant au moins une direction de mesure fixée dans une orientation déterminée.

D'autres détails et particularités ressortiront des revendications secondaires et de la description des dessins qui sont annexés au présent mémoire et qui illustrent, à titre d'exemples non limitatifs, le procédé et des formes de réalisation particulières du dispositif suivant l'invention.

La figure 1 montre en élévation et de face un dispositif de coupe de bloc de pierre pouvant mettre en oeuvre le procédé de l'invention.

La figure 2 est une représentation schématique en perspective, avec brisures et à une autre échelle, d'un autre dispositif de coupe pouvant mettre en oeuvre le procédé de l'invention, avec un type de réglage d'alignement de deux poulies d'entraînement et de guidage du câble diamanté.

Les figures 3 à 6 montrent schématiquement en coupe, à échelle agrandie, quatre façons de faire rouler un câble diamanté dans deux sens différents sur les flancs d'une poulie.

La figure 7 montre en coupe transversale agrandie une forme de réalisation d'un manchon diamanté polygonal.

La figure 8 montre schématiquement un agencement d'une zone de mesure pour la mise en oeuvre du procédé de l'invention.

La figure 9 montre un détail de schéma fonctionnel pour la mise en oeuvre de l'invention.

La figure 10 montre en vue en plan, avec coupe et brisures, à une autre échelle, des moyens de changement de position et/ou d'alignement d'une poulie du dispositif de l'invention.

La figure 11 montre une coupe suivant la ligne XI-XI de la figure 10.

La figure 12 montre une coupe semblable à celle de la figure 10, la poulie de câble diamanté étant en position inclinée.

La figure 13 montre schématiquement en coupe, à une autre échelle, un autre genre de guidage par les flancs de la poulie pour un manchon de forme rectangulaire.

La figure 14 montre dans une vue en plan, à une autre échelle, les deux poulies de la figure 2 avec un autre réglage d'alignement de ces dernières par rapport à celui de la figure 1.

Dans les différentes figures, les mêmes notations de référence désignent des éléments identiques ou analogues.

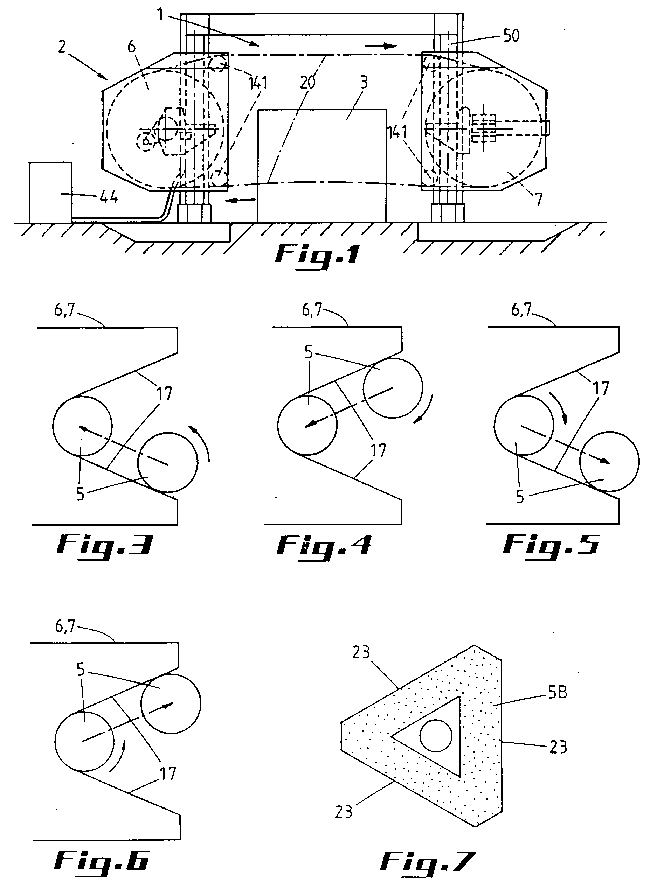

Le procédé suivant l'invention est destiné à la commande d'un câble diamanté 1 (figures 1 et 2) dans une machine de coupe, désignée dans l'ensemble par 2 et destinée par exemple à couper des blocs 3 de pierre naturelle en plaques.

Le câble diamanté 1 peut être composé entre autres (figure 2) d'un câble 4 proprement dit, par exemple en acier, en matériaux composites, avec torons, etc., et de "perles diamantées" ou manchons diamantés 5 enfilés sur le câble 4 et répartis, de préférence régulièrement, le long de l'axe longitudinal A du câble 4. Les manchons diamantés 5 sont fixés sur le câble 4 comme cela est déjà expliqué ci-dessus.

Dans le présent mode de réalisation de l'invention, décrit à titre d'exemple, la machine de coupe 2 est du type dit stationnaire. Il s'agit donc généralement d'une machine fixe à laquelle on apporte le bloc de pierre 3 de grande dimension, qui a été extrait d'une carrière et qui doit être débité en tranches ou plaques. A cet effet, la machine de coupe 2 usuelle comporte par exemple une poulie motrice 6 et une poulie réceptrice 7 situées de part et d'autre du bloc 3 à couper et agencées pour entraîner, guider et tendre, le câble diamanté 1 passé autour des deux poulies 6, 7 sous la forme d'une boucle sans fin. Usuellement, les axes de rotation 8, 9 des poulies 6, 7 respectives sont sensiblement horizontaux et seul le brin inférieur 10 du câble diamanté 1, situé entre les deux poulies 6, 7, est à mettre en contact avec le bloc 3 pour en assurer la coupe par le frottement des manchons diamantés 5 poussés contre le bloc 3 par la tension dans le câble diamanté 1.

Suivant l'invention, le procédé de commande est réalisé de la façon suivante. On détermine sur le câble diamanté 1 une direction transversale 11 qui passe à travers celui-ci et qui est fixe par rapport au câble 1 et on détermine sur cette direction 11 un sens 12. On met en circulation le câble diamanté 1 par mise en rotation de la poulie motrice 6. On localise dans l'espace la direction transversale 11 et le sens déterminé 12 à un moment déterminé lors de leur passage dans une zone 13 dite de mesure, par exemple la zone rectangulaire 13 de la figure 2, sensiblement transversale à l'axe longitudinal A. On compare ces direction transversale 11 et sens déterminé 12 à une direction transversale et un sens déterminé de référence et, en fonction de la comparaison, selon le cas, on modifie ou non ladite direction transversale et/ou le sens déterminé, en agissant sur le câble diamanté 1.

On choisit de préférence comme direction transversale 11 une direction radiale 110 et, par la comparaison susdite, on détecte entre autres une rotation éventuelle de cette direction radiale 110 autour de l'axe longitudinal A du câble diamanté 1, donc une rotation éventuelle correspondante du câble diamanté 1 et des manchons 5 autour de l'axe longitudinal A. On peut par exemple détecter ainsi une absence de rotation d'un câble muni de manchons cylindriques 5 et avantageusement agir en conséquence sur le câble 1 pour provoquer sa rotation afin qu'il en résulte une répartition sensiblement uniforme de l'usure périphérique des manchons diamantés 5. On obtient ainsi des localisations nécessairement variables de la direction 11 ou 110 et du sens 12 lors de leurs passages successifs par la zone de mesure 13.

Par la comparaison susdite, on peut aussi détecter une variation d'inclinaison de la direction radiale 110 par rapport à une direction longitudinale de référence de mise en circulation du câble 1, cette direction longitudinale de référence étant par exemple une direction optimale pour la coupe, tangente à l'axe A du câble 1 au croisement de ce dernier et d'une face d'entrée ou de sortie du câble 1 dans le bloc 3. Cette détection d'inclinaison permet alors d'agir en conséquence sur le câble 1, par exemple en déplaçant une ou les poulies 6, 7 de manière à maintenir l'axe A du câble 1 sensiblement dans cette position optimale.

Pour la commande du câble diamanté 1, il est avantageux que, d'une part, la localisation susdite dans l'espace de la direction radiale 110 comporte la localisation du point de croisement 14 de ladite direction radiale 110 et de l'axe longitudinal A et que, d'autre part, la comparaison comporte celle de la localisation du point de croisement 14 par rapport à un point de référence ou à une pluralité de points de référence, afin de déduire de cette dernière comparaison par exemple une avance du câble diamanté 1 dans le bloc 3 pendant la coupe.

Avantageusement, le procédé de commande suivant l'invention comporte pour la modification susdite en fonction de la comparaison de la direction 11 ou 110 et du sens 12, une action pour maintenir leurs localisations sensiblement identiques lors de passages successifs par la zone de mesure 13, par exemple en vue d'empêcher une rotation du câble diamanté sur lui-même autour de son axe longitudinal A lorsqu'il est muni de manchons à section polygonale 5.

Le procédé de commande suivant l'invention peut comporter en outre en fonction de la comparaison desdites localisations une modification d'un positionnement relatif entre le câble diamanté 1 et le bloc 3 pendant la coupe, par exemple par une translation, de préférence verticale, d'une ou des poulies 6, 7 pour poursuivre la coupe dans le bloc en conservant des inclinaisons optimales susdites du câble diamanté 1 par rapport aux faces du bloc 3. Une modification de la tension du câble 1, par exemple par translation d'une poulie 6, 7, peut aussi être entreprise à la suite de ladite comparaison, lorsque celle-ci en détermine entre autres la nécessité, par exemple si ladite direction 11 ou 110 n'est pas localisée à intervalles de temps fixes ou sensiblement réguliers entre des passages successifs de la direction par l'endroit de mesure 13 et s'il est déterminé qu'il y a glissement entre la poulie motrice 6 et le câble 1. De même, la nécessité d'une modification de l'entraînement pour la mise en circulation du câble 1 peut être détectée par exemple lorsqu'on a pu déterminer par ladite comparaison que la direction 11 ou 110 passe à des intervalles de temps réguliers par la zone de mesure 13, mais à une cadence différente d'une cadence sélectionnée.

Suivant l'invention, pour modifier ladite direction 11, 110 et/ou le sens déterminé sur elle, on agit sur la surface périphérique 15 du câble diamanté constituée principalement par celle des manchons 5. De préférence, à cet effet, on met en contact la surface périphérique 15 du câble diamanté 1 et une paroi 16 et l'on provoque un déplacement relatif entre surface périphérique 15 et paroi 16 pour provoquer un roulement du câble 1 sur cette dernière qui, très avantageusement, peut être un flanc interne 17 d'une gorge 18 de guidage du câble 1 dans une des poulies 6, 7 ou dans celles-ci. Dans ce cas, la modification susdite en fonction de la comparaison peut être une modification d'alignement de la ou des poulies 6, 7 par rapport à une portion 19, d'un brin 20 du câble 1 en boucle, qui arrive en contact avec un flanc interne 17 et/ou par rapport à une portion 21 d'un brin 20 du câble 1, qui quitte le flanc 17. Cette modification d'alignement est réalisée de façon que (figure 2) le câble diamanté 1 soit pressé contre le flanc 17 correspondant au sens de rotation souhaité pour le câble 1, afin que celui-ci puisse rouler pratiquement sans glissement sur ce flanc 17 jusqu'au fond de la gorge 18 (figures 3 et 4) pour un brin 20 qui arrive sur la poulie 6,7 ou bien inversement depuis le fond de la gorge 18 (figures 5 et 6) pour un brin 20 qui quitte la poulie 6, 7. A la figure 2, les flèches de rotation du câble 1 sur lui-même ne sont à considérer qu'à titre d'exemple uniquement indicatif d'une rotation voulue dans un seul sens et non dans des sens alternés, dans les deux brins 20 supérieur et inférieur.

A titre d'exemple, à la figure 2, pour modifier l'alignement, la poulie 7 est "reculée" d'une distance Δ suivant son axe 9 dont la position de départ est à l'horizontale, et ensuite l'axe de la poulie 7 est pivoté d'un angle γ pour que la poulie occupe la position dessinée dans la figure. Les valeurs Δ et γ ont été exagérées dans la représentation de cette figure afin d'y être perceptibles mais sans tenir compte de leur compatibilité avec les sens de rotation du câble 1 sur lui-même et expliqués en détail aux figures 3 à 6.

A titre d'exemple aussi, à la figure 14 la poulie 7 est "avancée" suivant son axe de rotation et celui-ci est ensuite pivoté pour que la poulie occupe la position dessinée. Dans cette figure aussi, les sens de rotation du câble 1 sur lui-même ne sont donnés qu'à titre d'exemple d'une rotation dans un seul sens, également sans tenir compte de leur compatibilité avec les sens de rotation expliqués en détail aux figures 3 à 6.

L'amplitude de la rotation du câble 1 autour de son axe A peut donc être réglée, pour sa valeur maximum, dans une mesure déterminée par la profondeur de la gorge 18 et par l'inclinaison du flanc 17 par rapport à un plan perpendiculaire à l'axe de poulie 6, 7, et, pour des valeurs intermédiaires entre la valeur maximum et zéro, par l'endroit où le câble diamanté entre en contact avec le flanc 17 de poulie 6, 7 dont l'axe de rotation n'est pas perpendiculaire au brin 20 considéré.

L'homme de métier comprend aisément que cette rotation relative du câble autour de son axe A et commandée peut être exploitée pour s'opposer au moins localement à une rotation automatique du câble diamanté 1 sur lui-même autour de son axe A.

Le pressage susdit du câble diamanté 1 contre le flanc 17 peut être réalisé aussi par des procédés autres que celui de la modification d'alignement susdit.

Pour des manchons 5 à section polygonale, dont le nombre de faces périphériques est élevé, on peut aussi agit par le roulement susdit. Pour des manchons 5B (figure 7) à section polygonale, dont le nombre de faces périphériques 23 est faible (3, 4, 5...) et/ou dont les faces ne sont pas égales, on préfère provoquer leur rotation ou leur immobilisation de rotation, sur eux-mêmes autour de l'axe A, en guidant à cet effet une ou plusieurs desdites faces périphériques 23 d'un ou de plusieurs manchons 5B.

Suivant l'invention, pour déterminer sur le câble diamanté 1 la direction transversale 11, ou de préférence radiale 110, on peut avantageusement agencer sur le câble diamanté 1 un élément aimanté 24 dont la distribution spatiale du champ magnétique est connue et est fixée, dans la présente forme de réalisation, par rapport à ladite direction radiale 110 et au sens déterminé 12. A cet effet, on peut faire coïncider l'axe magnétique S-N de l'élément aimanté 24 et ladite direction 110, l'orientation S-N de l'élément aimanté 24 donnant alors le sens déterminé 12.

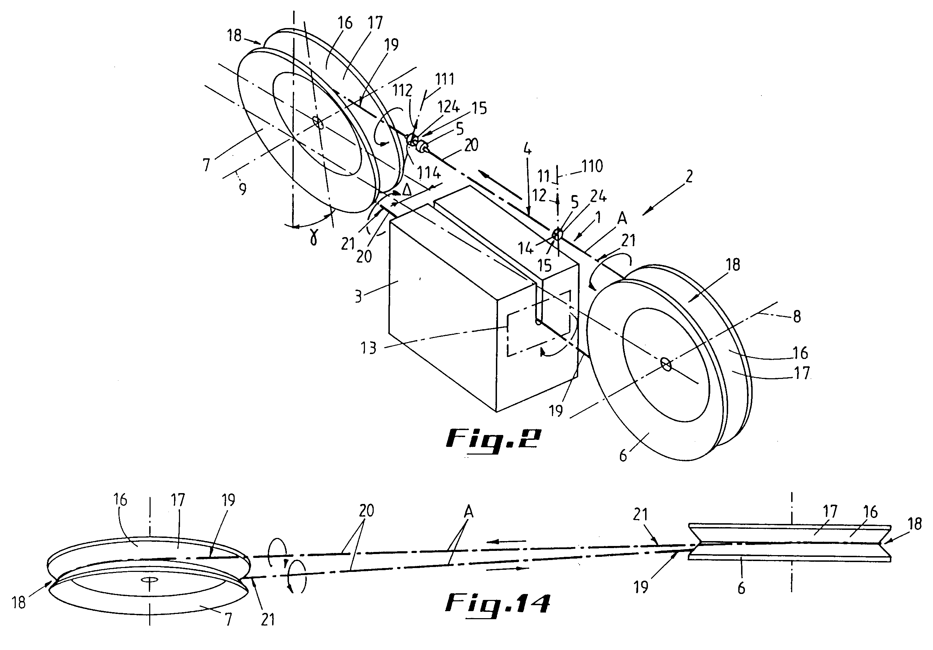

La localisation de la direction 110 (ou 11) et du sens 12 peut alors avoir lieu, suivant l'invention (figure 8), en mesurant en des endroits de mesure Mi (où $1 \leq i \leq n$) de la zone de mesure 13, à un moment déterminé et pour chacun des endroits de mesure Mi pris en considération, une valeur Vmi et son signe qui sont indicateurs d'une valeur vectorielle, par exemple de l'induction magnétique, qui y est produite par le champ magnétique de l'élément aimanté 24 présent dans la zone de mesure 13 à ce moment déterminé.

Dans le cas de l'exemple de la figure 8, les endroits de mesure Mi sont répartis régulièrement sur trois cercles Cx, Cy, Cz dans trois plans parallèles respectifs Px, Py, Pz sensiblement perpendiculaires à la direction théorique de l'axe longitudinal A, par exemple lorsque le câble 1 est en circulation, prêt à couper mais pas encore en contact avec le bloc 3. Les cercles sont pratiquement centrés sur cette direction théorique.

De préférence, on sélectionne parmi les valeurs indicatrices mesurées Vmi celles qui sont les plus significatives (par exemple les valeurs absolues les plus grandes, et...). Ces dernières, qui sont alors les seules prises en considération dans la suite, sont comparées à une ou plusieurs valeurs indicatrices de même genre évaluées, par exemple par calcul, Vci aux mêmes endroits de mesure Mi pour une ou des localisations connues possibles de l'élément aimanté 24 dans la zone de mesure 13 au même moment donné. On choisit alors comme localisation de l'élément aimanté 24 celle dont, pour chaque endroit de mesure Mi pris en considération, la valeur indicatrice évaluée Vci, prise séparément ou globalement avec les autres valeurs Vci, est comprise dans une tolérance donnée par rapport à la valeur indicatrice mesurée Vmi correspondante, prise respectivement séparément ou globalement avec les autres valeurs Vmi considérées.

Par exemple, pour vérifier cette tolérance, on peut appliquer pour toutes les valeurs mesurées considérées et celles calculées correspondantes :

$$0 \leq \Sigma_i \, (Vmi - Vci)^2 \leq \text{la tolérance susdite.}$$

Pour un élément aimanté 24 donné, on peut établir, en fonction d'une pluralité de positions du point 14 associé à cet élément aimanté 24 dans la zone de mesure 13 et en fonction d'une pluralité de directions 11 et sens 12 pour le même élément 24 autour de chaque point 14, un répertoire de valeurs Vci en tous les endroits de mesure Mi. La comparaison des valeurs mesurées Vmi considérées peut alors avoir lieu, par exemple par ordinateur, avec les valeurs Vci correspondantes du tableau, pour en déduire la position du point 14 et les direction 11 et sens 12 pour l'élément aimanté 24 au moment de la mesure considérée.

On préfère cependant, après une mesure de valeurs Vmi et une sélection de celles qui sont prises en considération, effectuer pour une localisation fictive possible de l'élément aimanté 24 un calcul de la valeur indicatrice Vci de l'induction magnétique résultante en chaque endroit de mesure Mi dont la valeur Vmi est prise en considération. On fait alors une comparaison des valeurs Vmi et Vci respectives. Si le résultat de la comparaison est dans ladite tolérance, la localisation fictive est considérée comme étant la localisation réelle de l'élément aimanté 24, définie ainsi par exemple par la position dans l'espace de son centre au point 14 et par l'orientation de la direction 11 et du sens 12. Par contre, si le résultat de la comparaison est en dehors de la tolérance, on choisit une nouvelle localisation fictive pour faire un nouveau calcul, une nouvelle comparaison et un nouvel examen par rapport à la tolérance, jusqu'à être dans la tolérance admise et décider que la dernière localisation fictive est considérée comme étant la localisation réelle de l'élément magnétique 24.

Une valeur vectorielle mesurable en un endroit d'un champ magnétique est l'induction magnétique. Une valeur indicatrice Vi de cette induction est par exemple une projection sur une droite ou direction de la mesure D (figure 8) de cette induction magnétique. ainsi, les valeurs Vmi et Vci sont avantageusement des valeurs respectivement mesurées et calculées, en chaque endroit de mesure Mi considéré, d'une projection de l'induction magnétique en cet endroit Mi.

Si, par exemple, on désire vérifier entre autres un battement du câble 1 dans une direction transversale et/ou, entre deux points axiaux 14, 114 (figure 2) écartés l'un de l'autre, une rotation relative variable, on peut déterminer à cet effet en correspondance avec ces deux points 14, 114 (figure 2) deux directions 11, 111 et sens 12, 112 respectifs correspondant à des éléments aimantés 24, 124 respectifs. Des localisations respectives correspondantes sont alors déterminées par mesure et calcul à des moments donnés respectifs et elles sont alors utilisées pour commander la modification de rotation du câble 1.

Suivant un aspect de l'invention, on détermine deux zones de mesure 13 distinctes (dont une seule est représentée) le long de la boucle fermée du câble 1 et l'on réalise dans chacune, comme ci-dessus, une localisation précitée soit pour un groupe [point 14, direction 11, sens 12] soit pour deux groupes semblables [14, 11, 12] et [114, 111, 112] avec l'exploitation de comparaisons des localisations respectives en chacune des zones 13, par exemple pour constater une rotation du câble 1 sur lui-même entre les deux zones 13.

Le dispositif de l'invention, pour la mise en oeuvre du procédé de commande susdit, est schématisé dans son ensemble aux figures 1 et 2. Il peut comporter des moyens usuels constituant les machines connues agencées pour la coupe de blocs de pierre naturelle avec un câble diamanté 1. Parmi ces moyens, il peut y avoir une poulie motrice 6 et une poulie réceptrice 7 agencées pour que leurs axes 8, 9 de rotation soient sensiblement horizontaux et parallèles, au moins lors d'un réglage initial du dispositif. Chaque poulie 6, 7 peut être montée, de façon connue pour la poulie motrice 6 et d'une façon expliquée ci-après pour la poulie réceptrice 7, de manière que les deux brins 20 du câble diamanté 1 soient sensiblement horizontaux l'un au-dessus de l'autre, au moins dans un réglage initial.

Le cas échéant (figure 1), des poulies de guidage auxiliaires 141 peuvent être prévues à une ou à chaque extrémité d'un ou des deux brins 20.

Les poulies motrice et réceptrice 6, 7 peuvent présenter chacune une gorge 18 profilée en V pour le guidage du câble 1. Les flancs internes 17 de la gorge sont usuellement en matière plastique ou en caoutchouc. La profondeur de la gorge 18 est de préférence sensiblement plus grande que le diamètre du câble diamanté 1.

Pour la détermination des directions 11, 110, 111 et sens 12, 112 fixes sur le câble diamanté 1, ce dernier comporte un élément aimanté 24 en chaque endroit que l'on souhaite surveiller pour la commande. Avantageusement, cet élément aimanté 24 peut avoir une forme de manchon aimanté 524 et être enfilé et fixé sur le câble 4 comme les manchons diamantés 5, cet élément aimanté 24 présentant de préférence un axe magnétique Nord-Sud sensiblement radial utilisé comme référence pour la direction 11, 110, 111 et le sens 12, 112 susdits. Le point de croisement 14 peut alors être celui de cet axe magnétique et de l'axe longitudinal A du câble diamanté 1. De plus, ce manchon aimanté 524 peut avoir avantageusement les mêmes formes et dimensions que les manchons diamantés 5 et, le cas échéant, être aussi diamanté. Ainsi, l'élément aimanté 524 sous ces dernières configurations ne perturbe pratiquement pas le fonctionnement du câble diamanté 1 parce qu'il n'y constitue pas un élément hétérogène par rapport à un câble diamanté 1 usuel.

Pour la mesure du champ magnétique produit par l'élément aimanté 24, il peut y avoir en chaque endroit de mesure Mi (figure 8) un détecteur 40 d'induction magnétique (schématisé à la figure 8 en M13) qui peut être formé de deux détecteurs à effet Hall connus, montés pour que leurs directions de mesure D soient sur une même droite et que leur sens de mesure soient opposés, et mesurant chacun la projection de l'induction magnétique résultant, en cet endroit Mi, du champ de l'élément 24.

Chaque détecteur 40 d'induction magnétique peut par exemple être positionné (figure 8) pour qu'un point de référence de ce dernier soit sur un cercle C dans un plan P de mesure, à l'endroit de mesure Mi correspondant. Les détecteurs 40 adjoints au plan Px mesurent par exemple chacun une projection suivant un axe de coordonnées des abscisses x, les détecteurs 40 adjoints au plan Py peuvent être agencés pour mesurer chacun une projection suivant un axe de coordonnées des ordonnées y et ceux qui sont adjoints au plan Pz de leur côté une projection suivant un axe de coordonnées en élévation z.

Bien sûr, selon le cas, on peut agencer des détecteurs 40 suivant d'autres configurations dans la zone de mesure 13, par exemple en n'utilisant qu'un ou deux des plans P précités, ou en panachant dans un même plan des directions D suivant des axes de coordonnées différents, ou encore en ayant une autre disposition des endroits de mesure Mi que les cercles C dans les plans P, etc....

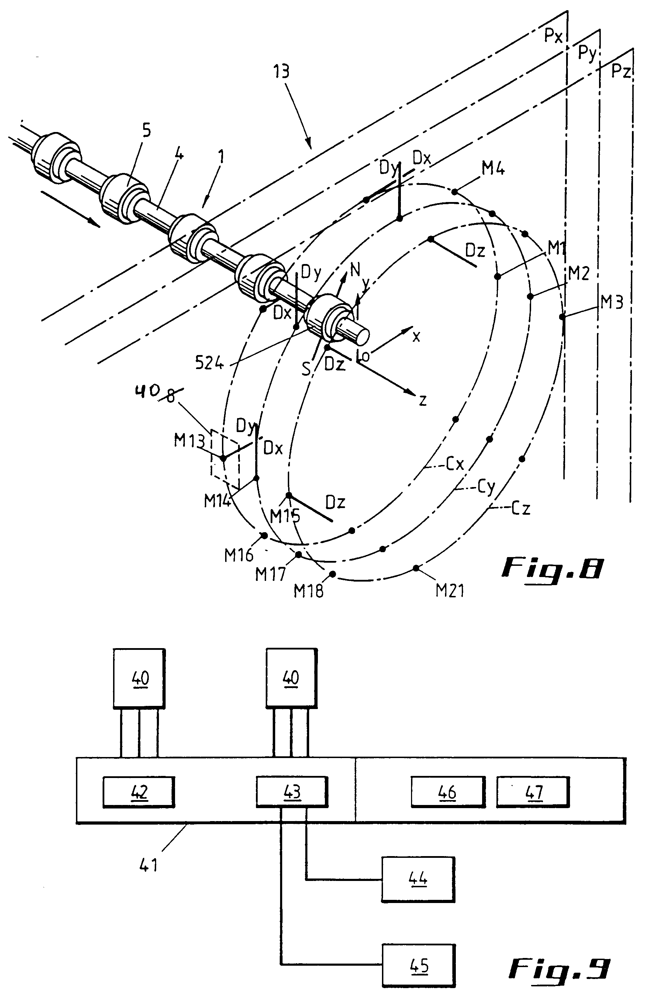

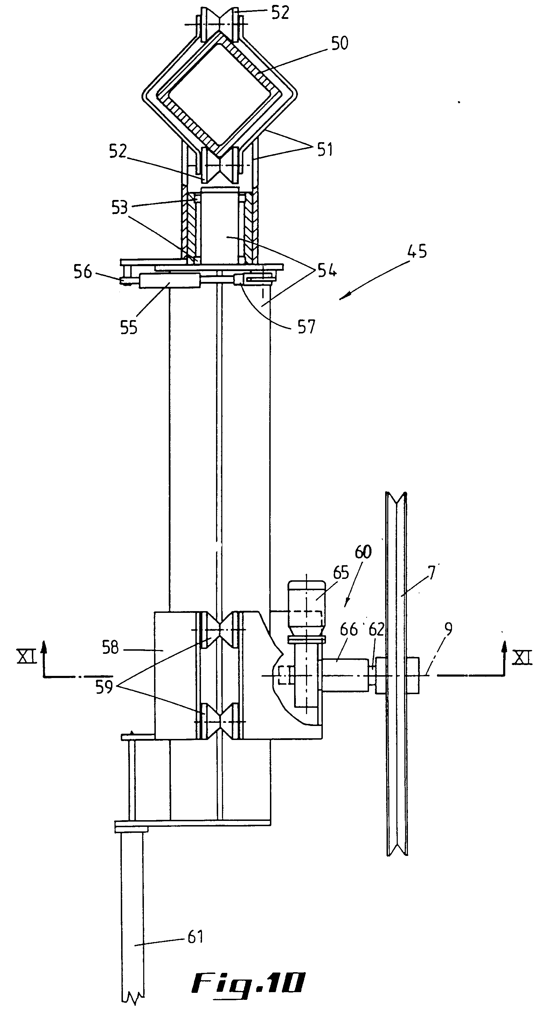

Les détecteurs 40 d'induction magnétique utilisés sont raccordés (figure 9) à une unité d'exploitation 41 de la mesure de l'induction magnétique, comprenant entre autres des moyens de calcul 42 pour la localisation suivant le procédé ci-dessus, une mémoire 47 pour y stocker par exemple la tolérance susdite admise, des moyens de comparaison 46 des valeurs mesurées Vmi et calculées Vci par rapport à ladite tolérance admise, et des moyens d'interface 43 pour agir en fonction de la comparaison, d'une part, sur la commande usuelle 44 (figures 1 et 9) de mise en circulation du câble 1 et de déplacement vertical des poulies 6, 7 et, d'autre part, sur des moyens 45 (figures 9 et 10) de changement de la position et/ou de l'alignement de l'axe de rotation 9 de, par exemple, la poulie réceptrice 7 ou encore sur des moyens de réglage de tension 61 du câble diamanté 1.

Pour la modification de la direction transversale 11, 110, 111 et du sens 12, 112, en particulier par déplacement relatif entre câble 1 et paroi ou flanc 17 d'une gorge de poulie 6, 7 en vue d'une rotation précitée du câble 1 ou d'un blocage de cette rotation, lesdits moyens de changement 45 peuvent être réalisés sous une forme représentée schématiquement aux figures 10 à 12 et être appliqués à l'axe 9 de la poulie réceptrice 7.

On retrouve à la figure 10 un montant vertical 50 de la figure 1. Sur ce montant vertical est guidé et circule, au moyen de galets biconiques 52, un chariot 51 pour le positionnement en hauteur du câble 1, entre autres en cours de coupe du bloc 3. Le chariot 51 porte, par l'intermédiaire de roulements 53, une console 54, sensiblement horizontale, de façon que cette dernière puisse pivoter dans le chariot 51. Un vérin 55 a son cylindre 56 fixé au chariot 51 et sa tige 57 fixée à la console 54 pour provoquer un pivotement de celle-ci commandé par l'interface 43 pour changer l'inclinaison γ de la poulie réceptrice 7.

Un autre chariot 58 peut circuler au moyen de galets de roulement biconiques 59 sur la console 54. Cet autre chariot 58 porte un montage 60 pour la poulie réceptrice 7 et il peut être déplacé le long de la console 54 au moyen d'un vérin 61 dont le cylindre est fixé à cette dernière et la tige au chariot 58. Par ce vérin 61, on peut entre autres régler la tension dans le câble 1, aussi par l'interface 43 à laquelle le vérin 61 peut être relié.

Le montage 60 pour la poulie 7 comprend un arbre 62 qui, à une extrémité, supporte par roulements la poulie 7 et, à l'autre extrémité, est fileté et vissé dans une roue 63 d'un réducteur à vis sans fin 64, cette dernière étant montée sur un arbre d'un moteur électrique 65 fixé au réducteur. L'arbre 62 est porté entre la roue 63 et la poulie 7 par un manchon 66 fixé à l'autre chariot 58 et dans lequel l'arbre 62 ne peut pas tourner en raison d'une clavette 67 fixée à l'arbre 62 et retenue dans une rainure longitudinale du manchon 66 de façon à y permettre un coulissement.

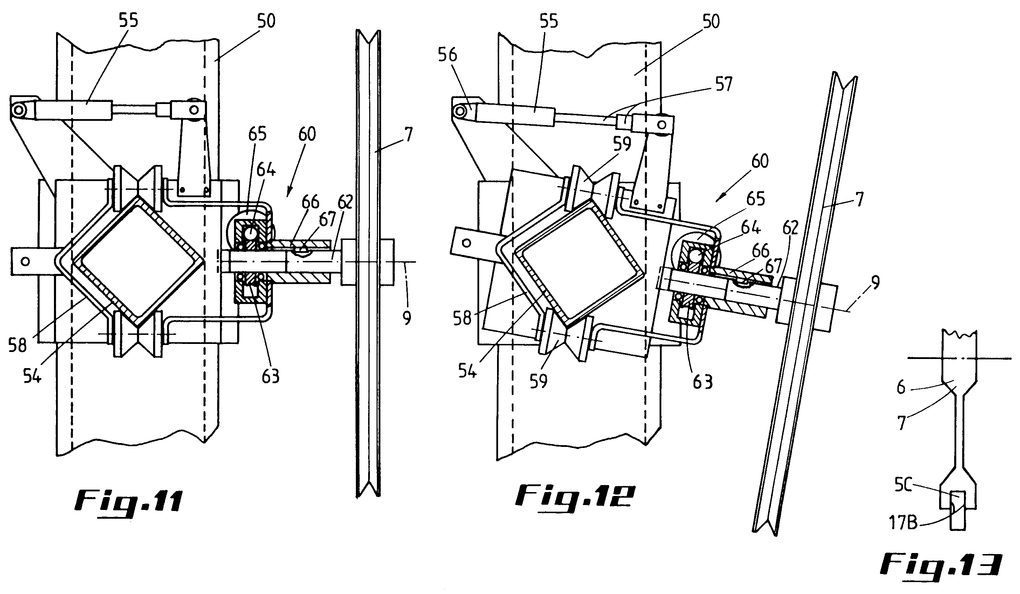

Le moteur 65 peut aussi être relié à l'interface 43 pour sa commande . Par une rotation du moteur 65, la vis sans fin 64 provoque la rotation de la roue 63 dans un sens ou dans l'autre et donc le "vissage" ou le "dévissage" de la roue 63 sur l'arbre 62 qui ne peut pas tourner à cause de la clavette 67. La roue 63 ne pouvant pas se déplacer axialement dans le réducteur, c'est l'arbre 62 qui entre ou sort de celui-ci, en déplaçant de la même façon la poulie 7 pour en modifier l'alignement d'une valeur maximale +Δ ou -Δ (figure 11).

Dans un cas plus particulier de manchons diamantés 5C de section transversale par exemple rectangulaire (figure 13), le dispositif suivant l'invention comporte, sous forme de flancs parallèles 17B des poulies 6, 7, des moyens de guidage agencés pour entrer en contact avec au moins une face desdits manchons 5C, en vue de commander leur rotation, et donc celle du câble 1, autour de l'axe longitudinal A. Ces flancs 17B prévus par exemple sur la poulie 7 peuvent ainsi être déplacés par le moteur 65 et/ou inclinés autrement par le vérin 55 reliés pour cet actionnement à l'interface 43.

Il doit être entendu que l'invention n'est nullement limitée aux formes de réalisation décrites et que bien des modifications peuvent être apportées à ces dernières sans sortir du cadre des revendications.

Ainsi, on comprend qu'au lieu de modifier la position et l'inclinaison de la poulie 7, on peut le faire pour la poulie 6, pour les poulies 141, pour plusieurs poulies, ...

De plus, lorsqu'elles sont présentes, les poulies 141 peuvent être d'alignement et de position fixes, sauf dans une direction verticale nécessaire pour que le câble 1 puisse suivre la progression de la coupe, ainsi une modification de position et/ou d'alignement d'une ou des poulies 6, 7 peut ne pas modifier l'alignement du câble diamanté 1 dans le bloc 3 pendant la coupe.

Il peut être préféré d'agencer les capteurs 40 (figure 8) sur une portion de cercle (support en demi-lune) ou sur un autre contour ouvert, de façon à permettre de passer le câble 1 depuis l'extérieur jusque dans ce contour sans avoir à soit ouvrir le câble soit démonter des éléments de support des capteurs 40. L'orientation de détection de ces capteurs peut n'être que "radiale" ou "tangentielle" au contour choisi.

Au lieu de moyens magnétiques, l'invention peut aussi être réalisée par exemple avec des moyens optiques.

Par exemple, l'invention concerne aussi un dispositif dans lequel les axes de rotation 9 et 8 des poulies 7 et 6 sont maintenus parallèles l'un à l'autre et par exemple horizontaux. Une ou des poulies auxiliaires, par exemple à axes verticaux, peuvent être agencées en appui contre une portion de brin 19 ou 21, entre bloc à scier 3 et poulie 6 et/ou 7, pour modifier le contact de la portion de brin avec un ou les flancs 17 de la ou des poulies 6, 7.

Alors, une poulie auxiliaire peut être agencée de façon à suivre le long de son axe vertical fixe le déplacement vertical, vers le bas, du brin 20 en cours de coupe. Alors, la poulie 7 peut être agencée pour être déplacée le long de son axe horizontal 9, mobile parallèlement à lui-même pour l'avance de la coupe, pour modifier le contact entre le flanc 17 et la portion de brin 21 et donc la rotation du brin 20 autour de son axe longitudinal. Cet agencement permet au brin de coupe 20 de progresser selon un plan vertical fixe.

Dans une autre configuration du même dispositif à poulies auxiliaires précitées, une autre poulie auxiliaire à axe vertical est disposée entre la poulie 7 et la poulie auxiliaire susdite située alors près du bloc à scier 3, l'autre poulie auxiliaire étant située de l'autre côté du brin 20 par rapport à la poulie auxiliaire susdite. L'autre poulie auxiliaire peut alors être montée de façon à pouvoir également suivre la course verticale de coupe du brin 20 mais de façon à pouvoir être déplacée en plus suivant une direction horizontale perpendiculaire audit brin de câble 20. La poulie 7, de son côté, peut être agencée pour ne pouvoir que réaliser la course verticale du coupe du brin 20, avec ou sans déplacement le long de son propre axe de rotation 9. Dans ce cas, le déplacement de l'autre poulie auxiliaire suivant ladite direction horizontale permet de modifier le contact entre portion de brin 21 et flanc 17 sans modifier la position du plan de coupe vertical du brin 20, qui est donnée par la position de la poulie auxiliaire susdite. Le câble 1 est, par exemple au repos du dispositif et dans une position du départ des poulies auxiliaires susdite et autre, en contact avec le plus grand diamètre du flanc 17 choisi pour le sens de rotation souhaité du câble 1.

L'une et/ou l'autre des constructions décrites ci-dessus pour la ou les poulies auxiliaires susdite et autre peuvent être appliquées en fait à n'importe quelle portion de brin 19 ou 21 repérée à la figure 2 ou éventuellement à n'importe quelle combinaison de ces brins 19 et 21 sans sortir du cadre de la présente invention déposée en priorité en Belgique le 23 juillet 1993 sous le numéro 09300773 et dont il ressort clairement que le réglage de la rotation souhaitée est obtenu par un déplacement relatif entre portions(s) de brin 19, 21 et flanc(s) 17 de poulie(s) 6, 7 ce déplacement relatif pouvant même résulter d'un changement d'orientation d'un ou des axes de rotation des poulies auxiliaires.

Dans ce même contexte, les poulies 141 (figure 1) et/ou auxiliaires précitees peuvent être montées sur des moyens de changement de position et/ou d'alignement de leurs axes de rotation, ces moyens pouvant être motorisés et raccordés à l'unité d'exploitation de la mesure 41 (éventuellement à la place des, ou en combinaison avec les moyens de changement 45 ci-dessus) qui, dans ce cas, peut être agencée pour actionner en outre les moyens de changement desdites poulies auxiliaires.

## Revendications

1. Procédé de commande d'un câble ou fil de coupe (1) dans une machine de coupe, en particulier d'un câble diamanté (1) pour la coupe dans des blocs (3), notamment en pierre naturelle, le câble diamanté (1) comportant, répartis et fixés le long de son axe longitudinal, des manchons diamantés (5) qui assurent la coupe, le procédé comprenant une mise en circulation du câble diamanté (1) sous la forme d'une boucle sans fin, le procédé étant caractérisé par :

   - une détermination sur le câble diamanté (1) d'au moins une direction (11, 111) passant à travers ce dernier et fixe par rapport à lui et d'un sens (12, 112) déterminé sur cette direction (11, 111),
   - une localisation dans l'espace de ladite direction transversale (11, 111) et du sens déterminé (12, 112) à un moment donné, lors de leur passage par au moins une zone de mesure (13),
   - une comparaison des direction transversale (11, 111) et sens, déterminé (12, 112) localisés avec une direction transversale et un sens déterminé de référence, et
   - une modification éventuelle, en fonction de la comparaison, de la direction transversale (11, 111) et/ou du sens déterminé (12, 112).

2. Procédé de commande suivant la revendication 1, caractérisé en ce que l'on sélectionne comme direction transversale (11, 111) une direction radiale (110) et en ce que la comparaison comporte une détection au moins d'une rotation éventuelle de la direction radiale (110) autour de l'axe longitudinal (A) du câble diamanté (1) et/ou d'une variation d'inclinaison de la direction radiale (110) par rapport à une direction longitudinale de référence de la mise en circulation du câble.

3. Procédé de commande suivant la revendication 2, caractérisé en ce que la localisation susdite comporte en outre celle du point de croisement (14, 114) de la direction radiale (110) et de l'axe longitudinal (A) du câble diamanté (1) et en ce que la comparaison précitée comporte en outre celle de la localisation du point de croisement (14, 114) par rapport à la localisation d'un point de référence.

4. Procédé de commande suivant l'une quelconque des revendications 1 à 3, caractérisé en ce que la modification susdite est effectuée de façon à maintenir sensiblement identiques les localisations nécessaires, lors de passages successifs par la zone de mesure (13) de la direction transversale (11, 111) et du sens déterminé (12, 112).

5. Procédé de commande suivant l'une quelconque des revendications 1 à 3, caractérisé en ce que la modification susdite est effectuée de façon à obtenir de manière commandée des localisations successives variables, lors de passages successifs par la zone de mesure de la direction transversale (11, 111) et du sens déterminé (12, 112).

6. Procédé de commande suivant l'une quelconque des revendications 1 à 5, caractérisé en ce que la modification comporte en outre, en fonction de ladite comparaison, une modification d'un positionnement relatif entre le câble diamanté (1) et le bloc (3) en cours de coupe et/ou une modification de tension du câble diamanté (1) et/ou une modification d'un entraînement pour la mise en circulation du câble diamanté (1).

7. Procédé de commande suivant l'une quelconque des revendications 1 à 6, caractérisé en ce que pour la modification de la direction transversale (11, 111) et/ou du sens déterminé (12, 112) précités, on agit sur la surface périphérique (15) du câble (1) et des manchons (5).

8. Procédé de commande suivant la revendication 7, caractérisé en ce que pour agir sur la surface périphérique (15) susdite :

   - on met en contact, d'une part, le câble (4) et les manchons (5) et, d'autre part, une paroi (16), et
   - on provoque un déplacement relatif, entre le câble (1) et les manchons (5), d'une part, et la paroi (16), d'autre part, conférant un roulement commandé du câble et des manchons sur la paroi.

9. Procédé de commande suivant la revendication 8, caractérisé en ce que ladite mise en circulation du câble diamanté (1) sous la forme d'une boucle sans fin à lieu au moyen d'au moins une poulie à gorge (6,7) et en ce que la modification susdite comporte alors une modification d'alignement de la poulie (6,7) par rapport à un brin (20) du câble qui arrive sur la poulie et/ou un brin (20) du câble qui quitte la poulie, pour que le câble (4) et les manchons (5) roulent dans un sens souhaité sur un flanc (17) de la gorge (18), faisant office de paroi (16), avant de parvenir à fond de gorge et/ou vice versa, suivant un sens de rotation souhaité.

10. Procédé de commande suivant l'une quelconque des revendications 1 à 7, caractérisé en ce que pour des manchons (5B, 5C) à section transversale polygonale, on guide ces derniers par au moins une de leurs faces (23) pour agir sur la surface périphérique (15) du câble (4) et des manchons (5).

11. Procédé de commande suivant l'une quelconque des revendications 1 à 10, caractérisé en ce que :

- pour la détermination sur le câble diamanté (1) de ladite direction transversale (11, 111), éventuellement radiale (110), et du sens (12, 112) déterminé sur cette direction, on agence sur le câble diamanté (1) un élément aimanté (24) dont la distribution spatiale du champ magnétique est connue et est fixée par rapport à ladite direction transversale et audit sens déterminé, et
- pour la localisation précitée, au moment donné et en des endroits de mesure (Mi) fixés de la zone de mesure (13), pour chacun de ceux-ci on mesure au moins une valeur (Vmi), y compris son signe, indicatrice d'une valeur vectorielle dudit champ magnétique en cet endroit, on compare la valeur indicatrice mesurée (Vmi) à chaque endroit de mesure (Mi) considéré à au moins une valeur indicatrice de même genre évaluée (Vci) au même endroit de mesure en fonction d'une localisation connue possible pour l'élément aimanté (24) dans la zone de mesure (13) au moment donné, et l'on choisit comme localisation celle dont, pour chaque endroit de mesure (Mi) considéré, la valeur indicatrice évaluée (Vci) prise séparément ou globalement est comprise dans une tolérance admise par rapport à la valeur indicatrice mesurée (Vmi) prise de façon correspondante.

12. Procédé de commande suivant la revendication 11, caractérisé en ce que pour une évaluation de la valeur indicatrice (Vci) susdite en chaque endroit de mesure (Mi) on calcule sur base dudit champ magnétique connu cette valeur indicatrice (Vci) pour ladite localisation connue possible de l'élément aimanté (24) dans la zone de mesure (13) au moment donné, on compare la valeur indicatrice calculée (Vci) et celle mesurée (Vmi) et, si la comparaison donne un écart supérieur à la tolérance admise, on effectue un nouveau calcul et une nouvelle comparaison pour une nouvelle localisation connue possible, jusqu'à ce que la valeur indicatrice calculée (Vci) prise séparément ou globalement soit comprise dans la tolérance admise par rapport à la valeur indicatrice mesurée (Vmi) prise de façon correspondante.

13. Procédé de commande suivant l'une ou l'autre des revendications 11 et 12, caractérisé en ce que comme valeur indicatrice on mesure et on évalue à l'endroit de mesure (Mi), suivant une direction de mesure (D), une projection de l'induction magnétique du champ magnétique de l'élément aimanté (24).

14. Procédé de commande suivant l'une quelconque des revendications 1 à 13, caractérisé en ce qu'il comporte la détermination d'au moins deux directions transversales (11, 111) et sens déterminés (12, 112) correspondants, et éventuellement les points de croisement (14, 114) correspondants, et, en vue de ladite modification, une localisation respective des directions transversales et sens déterminés dans ladite zone de mesure (13), à des moments donnés respectifs.

15. Procédé de commande suivant l'une quelconque des revendications 1 à 14, caractérisé en ce qu'il comporte la détermination d'au moins deux zones de mesure (13) semblables à celle susdite, le long de la boucle du câble diamanté (1), et une exploitation des mesures respectives en ces zones pour ladite modification.

16. Dispositif pour la mise en oeuvre du procédé de commande suivant l'une quelconque des revendications 1 à 15, comportant entre autres au moins une poulie (6, 7) pour l'entraînement et/ou le guidage du câble diamanté (1) susdit, caractérisé en ce qu'il comporte :

- pour la détermination des direction (11, 111) et sens (12, 112) transversaux, éventuellement radiaux (110), fixes sur le câble diamanté (1), un élément aimanté (24) dont la distribution spatiale du champ magnétique est connue et présente des direction et sens particuliers fixes, l'élément aimanté (24) étant fixé au câble (4) pour que les direction et sens particuliers de son champ magnétique soient associés aux direction et sens transversaux susdits,

- pour la mesure du champ magnétique produit par l'élément aimanté (24), en des endroits de mesure (Mi) situés dans la zone de mesure (13) susdite, chaque fois au moins un détecteur (40) d'induction magnétique résultant du champ susdit, le détecteur (40) présentant au moins une direction de mesure (D) fixée dans une orientation déterminées, et

- pour la modification de la direction transversale (11, 110, 111) et/ou du sens déterminé (12, 112), en particulier par déplacement relatif entre le câble diamanté (1) et la paroi (16) susdite, des moyens de changement (45) de la position et/ou de l'alignement de l'axe de rotation d'au moins la poulie (6, 7) susdite, ces moyens de changement (45) étant éventuellement motorisés et raccordés à l'unité d'exploitation de la mesure (41) qui est, le cas échéant, agencée pour l'actionnement de ces moyens de changement (45).

17. Dispositif suivant la revendication 16, caractérisé en ce que l'élément aimanté (24) a une forme de manchon (524), est enfilé et fixé sur le câble (4) et en ce que de préférence il présente un axe Nord-Sud sensiblement radial.

18. Dispositif suivant la revendication 17, caractérisé en ce que l'élément aimanté (524) en forme de manchon a les mêmes dimensions que les manchons diamantés (5) et est également diamanté comme ceux-ci.

19. Dispositif suivant l'une quelconque des revendications 16 à 18, caractérisé en ce que le détecteur d'induction magnétique (40) est relié à une unité (41) d'exploitation de la mesure du champ magnétique, agencée pour déduire de la mesure du champ la localisation dans l'espace de la direction transversale (11, 110, 111)et/ou du sens déterminé (12, 112).

20. Dispositif suivant l'une quelconque des revendications 16 à 19, caractérisé en ce que dans le cas de manchons à section transversale polygonale (5B, 5C) il comporte des moyens de guidage (17B) agencés pour entrer en contact avec au moins une face (23) des manchons (5B, 5C) en vue de commander leur rotation autour de l'axe longitudinal du câble, ces moyens de guidage (17B) étant éventuellement motorisés et raccordés à l'unité d'exploitation de la mesure (41) qui, le cas échéant, est agencée pour l'actionnement de ces moyens de guidage.

21. Dispositif suivant l'une quelconque des revendications 16 à 19, caractérisé en ce qu'il comporte, pour la modification de la direction transversale (11, 110, 111) et/ou du sens déterminé (12, 112), en particulier par déplacement relatif entre le câble diamanté (1) et la paroi (16) susdite, au moins une poulie auxiliaire (141) et des moyens de changement de la position et/ou d'alignement de l'axe de rotation de la poulie auxiliaire, ces moyens de changement étant éventuellement motorisés et raccordés à l'unité d'exploitation de la mesure (41) qui est, le cas échéant, agencée pour l'actionnement de ces moyens de changement.

22. Dispositif suivant la revendication 21, caractérisé en ce que la poulie auxiliaire a un axe de rotation vertical et en ce qu'elle y est agencée de façon à suivre en cours de coupe, le long de cet axe fixe, le déplacement vertical d'un brin (20) qui lui est associé.

23. Dispositif suivant la revendication 22, caractérisé en ce que la poulie (6, 7) est agencée pour être déplacée, par les moyens de changement (45), le long de son axe horizontal (9) mobile parallèlement à lui-même, de manière à modifier le contact entre le flanc (17) de la poulie (6, 7) et la portion de brin (21) associée.

24. Dispositif suivant l'une ou l'autre des revendications 22 et 23, caractérisé en ce qu'il comporte une autre poulie auxiliaire à axe vertical qui est disposée entre la poulie (6, 7) et la poulie auxiliaire susdite, située elle-même alors près du bloc (3) à scier, et qui est située de l'autre côté du brin (20) associé par rapport à la poulie auxiliaire susdite et en ce que l'autre poulie auxiliaire est de préférence montée de façon à pouvoir aussi suivre la course verticale dudit brin (20) et de façon à pouvoir être déplacée suivant une direction horizontale perpendiculaire au brin (20) par les moyens de changement de la position et/ou d'alignement de l'axe de rotation de ladite poulie auxiliaire.

**Claims**

1. Method of controlling a cutting cable or wire (1) in a cutting machine, in particular of a diamond-impregnated cable (1) for cutting blocks (3), particularly of natural stone, the diamond-impregnated cable (1) comprising, diamond-impregnated sleeves (5) distributed and fixed along its longitudinal axis, which provide the cutting action, the method comprising the circulation of the diamond-impregnated cable (1) in the form of an endless loop, the method being characterised by:

- the determination on the diamond-impregnated cable (1) of at least one direction (11, 111) passing through the latter and constant in relation to it and of a determined orientation (12, 112) on this direction (11, 111);
- a tracking in space of the said transverse direction (11, 111) and of the determined orientation (12, 112), at a given moment, as they pass through at least one measuring zone (13);
- a comparison of the transverse direction (11, 111) and determined orientation (12, 112) as tracked with a reference transverse direction and determined orientation, and
- a possible modification, depending on the comparison, of the transverse direction (11, 111) and/or the determined orientation (12, 112).

2. Method of control according to claim 1, characterised in that a radial direction (110) is selected as the transverse direction (11, 111) and in that the comparison comprises the detection of at least one possible rotation of the radial direction (110) around the longitudinal axis (A) of the diamond-impregnated cable (1) and/or of a variation of angle of the radial direction (110) in relation to a reference longitudinal direction of circulation of the cable.

3. Method of control according to claim 2, characterised in that the aforesaid tracking comprises furthermore that of the point of intersection (14, 114) of the radial direction (110) with the longitudinal axis (A) of the diamond-impregnated cable (1) and in that the aforesaid comparison comprises in addition that of the tracking of the point of intersection (14, 114) in relation to the tracking of a reference point.

4. Method of control according to any one of claims 1 to 3, characterised in that the aforesaid modification is made so as to keep the necessary trackings substantially identical during subsequent passages through the measuring zone (13) of the transverse direction (11, 111) and of the determined orientation (12, 112).

5. Method of control according to any one of claims 1 to 3, characterised in that the aforesaid modification is made so as to obtain in a controlled manner the subsequent variable trackings during subsequent passages through the measuring zone of the transverse direction (11, 111) and of the determined orientation (12, 112).

6. Method of control according to any one of claims 1 to 5, characterised in that the modification comprises in addition, as a result of the said comparison, a modification of the relative positioning between the diamond-impregnated cable (1) and the block (3) during the cutting process and/or a modification of the tension of the diamond-impregnated cable (1) and/or a modification of a drive unit for promoting the circulation of the diamond-impregnated cable (1).

7. Method of control according to any one of claims 1 to 6, characterised in that for the modification of the transverse direction (11, 111) and/or of the determined orientation (12, 112) as aforesaid, action is taken on the peripheral surface (15) of the cable (1) and of the sleeves (5).

8. Method of control according to claim 7, characterised in that in order to act upon the peripheral surface (15) as aforesaid :

- the cable (4) and the sleeves (5) on the one hand are placed in contact with a side-wall (16) on the other hand, and
- a relative displacement is caused between the cable (1) and sleeves (5) on the one hand and the side-wall (16) on the other hand, imparting a controlled rolling motion of the cable and the sleeves against the side-wall.

9. Method of control according to claim 8, characterised in that the said circulation of the diamond-impregnated cable (1) in the form of an endless loop is effected by means of at least one grooved pulley (6, 7) and in that the aforesaid modification comprises a modification of alignment of the pulley (6, 7) in relation to a strand (20) of the cable arriving at the pulley and/or a strand (20) of the cable leaving the pulley so that the cable (4) and the sleeves (5) roll in the desired orientation over a flank (17) of the channel (18), acting as a side-wall (16), before reaching the bottom of the groove and/or vice versa, according to the direction of rotation desired.

10. Method of control according to any one of claims 1 to 7, characterised in that for the sleeves (5B, 5C) of polygonal cross-section, these are guided by at least one of their faces (23) to act on the peripheral surface (15) of the cable (4) and the sleeves (5).

11. Method of control according to any one of claims 1 to 10 characterised in that :

- for determining on the diamond-impregnated cable (1) the said transverse direction (11, 111), possibly radial (110), and the orientation (12, 112) determined on that direction, a magnetised element (24) of a known spatial distribution of the magnetic field fixed in relation to the said transverse direction and the said determined orientation is arranged on the diamond-impregnated cable (1), and
- for the aforesaid tracking at a given moment and at fixed measuring points (Mi) in the measuring zone (13), for each of the latter at least one value (Vmi) is measured, including its sign, indicative of a vectorial value of the said magnetic field at that point and the measured indicative value (Vmi) at each measuring point (Mi) in question is compared with at least one assessed indicative value of the same kind (Vci) at the same measuring point as a function of a possible known tracking for the magnetised element (24) in the measuring zone (13) at the given moment, and selected as the tracking result is that for which the assessed indicative value (Vci), taken separately or together for each measuring point (Mi) in question, lies within the accepted tolerance in relation to the measured indicative value (Vmi) taken in a corresponding manner.

12. Method of control according to claim 11, characterised in that for an assessment of the aforesaid indicative value (Vci) at each measuring point (Mi), this indicative value (Vci) is calculated on the basis of the said known magnetic field for the said possible known tracking of the magnetised element (24) within the measuring zone (13) at the given moment, the calculated indicative value (Vci) is compared to the measured value (Vmi) and, if the comparison gives a difference greater than the accepted tolerance, a new calculation and a new comparison are carried out for a new possible known tracking until the calculated indicative value (Vci) taken separately or together lies within the accepted tolerance in relation to the measured indicative value (Vmi) taken in a corresponding manner.

13. Method of control according to either one of claims 11 and 12, characterised in that as the indicative value, a projection of the magnetic induction of the magnetic field of the magnetised element (24) is measured and assessed at the measuring point (Mi), following a direction of measurement (D).

14. Method of control according to any one of claims 1 to 13, characterised in that it comprises the determination of at least two transverse directions (11, 111) and corresponding determined orientations (12, 112), and possibly the corresponding points of intersection (14, 114) and, in view of the said modification, the respective tracking of the transverse directions and determined orientations in the said measuring zone (13) at respective given moments.

15. Method of control according to any one of claims 1 to 14, characterised in that it comprises the determination of at least two measuring zones (13) similar to that mentioned above, along the loop of the diamond-impregnated cable (1), and the processing of the respective measurements in these zones for the said modification.

16. Devise for implementing the method of control according to any one of claims 1 to 15, comprising among others at least one pulley (6, 7) for driving and/or guiding the aforesaid diamond-impregnated cable (1), characterised in that it comprises :

    - for determining the transverse or possibly radial direction (11, 111) and orientation (12, 112), constant over the diamond-impregnated cable (1), a magnetised element (24), for which the spatial distribution of the magnetic field is known and presents particular fixed direction and orientation, the magnetised element (24) being fixed to the cable (4) so that the particular direction and orientation of its magnetic field are associated with the aforesaid transverse direction and orientation,
    - for measuring the magnetic field produced by the magnetised element (24), at measuring points (Mi) situated within the aforesaid measuring zone (13), each time at least one detector (40) of the magnetic induction resulting from the said field, the detector (40) having at least one measuring direction (D) fixed in a determined orientation, and
    - for the modification of the transverse direction (11, 110, 111) and/or the determined orientation (12, 112), in particular by the relative displacement between the diamond-impregnated cable (1) and the aforesaid side-wall (16), means (45) of changing the position and/or the alignment of the axis of rotation of at least the aforesaid pulley (6, 7), these means of change (45) possibly being motorised and connected to the measurement processing unit (41) which is, eventually, arranged so as to activate these means of change (45).

17. Device according to claim 16, characterised in that the magnetised element (24) is in the form of a sleeve (524) slotted on and fixed to the cable (4) and in that preferably it has a substantially radial North-South axis.

18. Device according to claim 17, characterised in that the sleeve-shaped magnetised element (524) is of the same dimensions as the diamond-impregnated sleeves (5) and like them is also diamond-impregnated.

19. Device according to any one of claims 16 to 18, characterised in that the magnetic induction detector (40) is connected to a unit (41), for processing the measurement of the magnetic field, arranged so as to deduce from the field measurement the tracking in space of the transverse direction (11, 110, 111) and/or the determined orientation (12, 112).

20. Device according to any one of claims 16 to 19, characterised in that in the case of the polygonal shaped sleeves (5B, 5C), it comprises guides (17B) arranged to come into contact with at least one face (23) of the sleeves (5B, 5C) with a view to controlling their rotation around the longitudinal axis of the cable, these guides (17B) being possibly motorised and connected to the measurement processing unit (41) which, eventually, is arranged so as to activate these guides.

21. Device according to any one of claims 16 to 19, characterised in that it comprises, for the modification of the transverse direction (11, 110, 111) and/or the determined orientation (12, 112), in particular by the relative displacement between the diamond-impregnated cable (1) and the aforesaid side-wall (16), at least one auxiliary pulley (141) and means of changing the position and/or alignment of the axis of rotation of the auxiliary pulley, such means of change possibly being motorised and connected to the measurement processing unit (41) which is, eventually, arranged so as to activate these means of change.

22. Device according to claim 21, characterised in that the auxiliary pulley has a vertical rotation axis and in that it is arranged so as to follow during the cutting process, along this fixed axis, the vertical displacement of a strand (20) which is adjoined to it.

23. Device according to claim 22, characterised in that the pulley (6, 7) is arranged so as to be displaced by the means of change (45) along its horizontal axis (9) which is movable parallel to itself, so as to modify the contact between the flank (17) of the pulley (6, 7) and the part of the adjoined strand (21).

24. Device according to either one of claims 22 and 23, characterised in that it comprises another auxiliary pulley having a vertical axis and which is disposed between the pulley (6, 7) and the aforesaid auxiliary pulley, the latter being located then near the clock (3) to be cut, and which is situated on the other side of the adjoined strand (20) with regard to the aforesaid auxiliary pulley, and in that the other auxiliary pulley is preferably mounted so as to be able to also follow the vertical course of said strand (20) and so as to be also able to be displaced along an horizontal direction, which is perpendicular to the strand (20), by the action of the means of change of the position and/or alignment for the rotation axis of the aforesaid auxiliary pulley.

**Patentansprüche**

1. Verfahren zum Steuern eines Schneideseils oder - drahts (1) in einer Schneidemaschine, insbesondere eines mit Diamanten besetzten Seils (1) zum Sägen von insbesondere aus Naturstein bestehenden Blöcken (3), wobei das Diamantseil (1) entlang seiner Längsachse verteilte und befestigte diamantbesetzte Hülsen (5) trägt, die den Schnitt bewirken, und wobei das Verfahren einen Umlauf des Diamantseils (1) in Form einer endlosen Schleife vorsieht,
**gekennzeichnet durch**

- die Festlegung an dem Diamantsell (1) mindestens einer quer zu diesem verlaufenden und in Bezug darauf festen Richtung (11, 111) und eines in dieser Richtung (11, 111) bestimmten Richtungssinnes (12, 112),

- die räumliche Lokalisierung der genannten Querrichtung (11, 111) und des bestimmten Richtungssinnes (12, 112) zu einem gegebenen Zeitpunkt bei deren Durchlauf durch mindestens eine Meßzone (13),

- einen Vergleich der lokalisierten Querrichtung (11, 111) und des lokalisierten bestimmten Richtungssinnes (12, 112) mit einer Bezugs-Querrichtung und einem bestimmten Bezugs-Richtungsginn, und

- abhängig von dem Vergleich gegebenenfalls eine Änderung der Querrichtung (11, 111) und/oder des bestimmten Richtungsginnes (12, 112).

2. Steuerverfahren nach Anspruch 1,
**dadurch gekennzeichnet,**
daß als Querrichtung (11, 111) eine Radialrichtung (110) gewählt wird und daß der Vergleich die Feststellung mindestems einer eventuellen Rotation der Radialrichtung um die Längsachse (A) des Diamantseils (1) und/oder eine Änderung der Neigung der Radialrichtung (110) bezüglich einer Besugslängsrichtung des Antriebs für den Seilumlauf umfaßt.

3. Steuerverfahren nach Anspruch 2,
**dadurch gekennzeichnet,**
daß die genannte Lokalisierung weiterhin die Lagebestimmung des Kreuzungspunktes (14, 114) der Radialrichtung (110) und der Längsachse (A) des Diamantseils (1) umfaßt und daß der genannte Vergleich weiterhin den Vergleich der Lage des Kreuzungspunkts (14, 114) in Bezug auf die Lage eines Bezugspunkts umfaßt.

4. Steuerverfahren nach einem der Ansprüche 1 bis 3,
**dadurch gekennzeichnet,**
daß bei aufeinanderfolgenden Durchläufen der Querrichtung (11, 111) und des bestimmten Richtungssinnes (12, 112) durch die Meßzone (13) die genannte Änderung derart bewirkt wird, daß die erforderlichen Lagen weitgehend identisch aufrecht erhalten werden.

5. Steuerverfahren nach einem der Ansprüche 1 bis 3,
**dadurch gekennzeichnet,**
daß bei aufeinanderfolgenden Durchläufen der Querrichtung (11, 111) und des bestimmten Richtungssinnes (12, 112) durch die Meßzone die genannte Änderung derart ausgeführt wird, daß gesteuert aufeinanderfolgend variable Lagen erhalten werden.

6. Steuerverfahren nach einem der Ansprüche 1 bis 5,
**dadurch gekennzeichnet,**
daß die Änderung weiterhin abhängig von dem Vergleich eine Änderung der Relativlage zwischen dem Diamantseil (1) und dem Block (3) im Verlauf des Schnittes und/oder eine Spannungsänderung des Diamantseils (1) und/oder eine Antriebsänderung für den Umlauf des Diamantseils (1) umfaßt.

7. Steuerverfahren nach einem der Ansprüche 1 bis 6,
**dadurch gekennzeichnet,**
daß zur Änderung der Querrichtung (11, 111) und/oder des bestimmten Richtungssinnes (12, 112) auf die Umfangsfläche (15) des Seils (1) und der Hülsen (5) eingewirkt wird.

8. Steuerverfahren nach Anspruch 7,
**dadurch gekennzeichnet**,
daß zum Zweck des Einwirkens auf die Umfangsfläche (15)

- das Seil (1) und die Hülsen (5), einerseits, und eine Wand (16), andererseits, in Kontakt gebracht werden und

- zwischen dem Seil (1) und den Hülsen (5), einerseits, und der Wand (16), andererseits, eine Relativversetzung ausgeführt wird, die ein gesteuertes Abrollen des Seils und der Hülsen auf der Wand herbeiführt.

9. Steuerverfahren nach Anspruch 8,
**dadurch gekennzeichnet**,
daß der Umlauf des Diamantseils (1) in Form einer endlosen Schleife mittels zumindest einer Seilscheibe (6, 7) mit einer Nut stattfindet und daß die genannte Änderung dementsprechend eine Änderung der Ausrichtung der Seilscheibe (6, 7) bezüglich eines Seiltrums (20) umfaßt, das auf die Seilscheibe aufläuft, und/oder eines Seiltrums (20), das von der Seilscheibe abläuft, damit das Seil (1) und die Hülsen (5) in einem gewünschten Richtungssinn entsprechend einem gewünschten Rotationssinn auf einer Flanke (17) der Nut (18), die als Wand (16) dient, abrollen, bevor sie in den Nutgrund gelangen und/oder umgekehrt.

10. Steuerberfahren nach einem der Ansprüche 1 bis 7,
**dadurch gekennzeichnet**,
daß bei Hülsen (5B, 5C) mit einem polygonalen Querschnitt die Hülsen zumindest über eine ihrer Flächen (23) geführt werden, um so auf die Umfangsfläche (15) des Seils (1) und der Hülsen (5) einzuwirken.

11. Steuerverfahren nach einem der Ansprüche 1 bis 10,
**dadurch gekennzeichnet**,
daß

- für die Festlegung der Querrichtung (11, 111) bzw. der Radialrichtung (110) und des auf dieser Richtung bestimmten Richtungssinnes (12, 112) an dem Diamantseil (1) auf diesem ein Magnetelement (24) angeordnet wird, dessen räumliche Magnetfeldverteilung bekannt ist und das in Bezug auf die Querrichtung und den bestimmten Richtungssinn festgehalten ist, und daß

- für die genannte Lokalisierung zu dem gegebenen Zeitpunkt und an in der Meßzone (13) fixierten Meßstellen (Mi) für jede davon zumindest ein Wert (Vmi) einschließlich dessen Vorzeichen gemessen wird, der einen Vektorwert des genannten Magnetfeldes an dieser Stelle anzeigt, der gemessene Anzeigewert (Vmi) an jeder betrachteten Meßstelle (Mi) mit zumindest einem geschätzten Anzeigewert (Vci) gleicher Art an derselben Meßstelle gemäß einer bekannten und für das Magnetelement (24) zu dem gegebenen Zeitpunkt in der Meßzone (13) möglichen Lokalisierung verglichen wird und daß als Lokalisierung diejenige gewählt wird, für die an jeder betrachteten Meßstelle (Mi) der geschätzte Anzeigewert (Vci), getrennt für sich oder insgesammt erfaßt, innerhalb einer bezüglich des gemessenen, auf entsprechende Weise erfaßten Anzeigewerts zugelassenen Toleranz liegt.

12. Steuerverfahren nach Anspruch 11,
**dadurch gekennzeichnet**,
daß für die Schätzung des genannten Anzeigewerts (Vci) an jeder Meßstelle (Mi) dieser Anzeigewert (Vci) für die genannte bekannte und für das Magnetelement (24) in der Meßzone (13) zu dem gegebenen Zeitpunkt mögliche Lokalisierung auf der Grundlage des bekannten Magnetfeldes berechnet wird, daß der berechnete Anzeigewert (Vci) und der Meßwert (Vmi) miteinander verglichen werden und daß, wenn der Vergleich eine über die Toleranz hinausgehende Differenz liefert, eine erneute Berechnung und ein erneuter Vergleich für eine neue bekannte mögliche Lokalisierung durchgeführt wird bis der berechnete Anzeigewert (Vci), getrennt für sich oder insgesamt erfaßt, innerhalb der bezüglich des gemessenen, auf entsprechende Weise erfaßten Anzeigewerts zugelassenen Toleranz liegt.

13. Steuerverfahren nach Anspruch 11 oder 12,
**dadurch gekennzeichnet**,
daß als Anzeigewert längs einer Meßrichtung (D) eine Projektion der magnetischen Induktion des Magnetfeldes des Magnetelements (24) gemessen und geschätzt wird.

14. Steuerverfahren nach einem der Ansprüche 1 bis 13,
**dadurch gekennzeichnet**,
daß es die Festlegung von zumindest zwei Querrichtungen (11, 111) und entsprechender bestimmter Richtungssinne (12, 112) und gegebenenfalls der entsprechenden Kreuzungspunkte (14, 114) sowie hinsichtlich der genannten Änderung eine jeweilige Lokalisierung der Querrichtungen und bestimmten Richtungssinne in der Meßzone (13) zu dem jeweiligen gegebenen Zeitpunkt umfaßt.

15. Steuerverfahren nach einem der Ansprüche 1 bis 14,
**dadurch gekennzeichnet**,
daß es die Festlegung von zwei der genannten Meßzone ähnlichen Meßzonen (13) längs der Schleife des Diamantseils (1) sowie eine Auswertung der jeweiligen Messungen in diesen Zonen für die genannte Änderung umfaßt.

16. Vorrichtung für die Durchführung des Steuerverfahrens nach einem der Ansprüche 1 bis 15, die unter anderem zumindest eine Seilscheibe (6, 7) für den Antrieb und/oder die Führung des genannten Diamantseils (1) aufweist,
**dadurch gekennzeichnet**,
daß sie umfaßt

- ein Magnetelement (24) für die Festlegung von Querrichtungen (11, 111) und Querrichtungssinnen (12, 112) bzw. Radialrichtungen (110) an dem Diamantseil, dessen räumliche Magnetfeld-Verteilung bekannt ist und besondere feste Richtungen und Richtungssinne hat, wobei das Magnetelement (24) an dem Seil (1) fixiert ist, um die Richtungen und Richtungssinne seines Magnetfelds den genannten Querrichtungen und Quer-Richtungssinnen zuzuordnen,
- jeweils zumindest einen Detektor (40) für die aus dem Magnetfeld resultierende magnetische Induktion zur Messung des durch das Magnetelement (24) erzeugten Magnetfelds an den in der Meßzone (13) gelegenen Meßstellen (Mi), wobei der Detektor (40) zumindest eine in einer vorbestimmten Orientierung festgelegte Meßrichtung (D) aufweist, und
- eine Einrichtung (45) zur Änderung der Lage und/oder der Ausrichtung der Drehachse zumindest der Seilscheibe (6, 7) für die Änderung der Querrichtung (11, 110, 111) und/oder des bestimmten Richtungssinnes (12, 112), insbesondere durch Relativverlagerung zwischen dem Diamantseil (1) und der genannten Wand (16), wobei die Änderungseinrichtung (45) eventuell motorbetrieben und an die Meßauswertungseinheit (41) angeschlossen ist, die gegebenenfalls zur Betätigung der Änderungseinrichtung (45) vorgesehen ist.

17. Vorrichtung nach Anspruch 16,
**dadurch gekennzeichnet**,
daß das Magnetelement (24) eine Hülsenform (524) hat, auf das Seil (1) aufgefädelt und darauf fixiert ist und daß es vorzugsweise eine weitgehend radiale Nord-Sind-Achse aufweist.

18. Vorrichtung nach Anspruch 17,
**dadurch gekennzeichnet**,
daß das hülsenförmige Magnetelement (524) die gleichen Abmessungen wie die diamantbesetzten Hülsen (5) hat und ebenso wie diese diamantbesetzt ist.

19. Vorrichtung nach einem der Ansprüche 16 bis 18,
**dadurch gekennzeichnet**,
daß der Detektor (40) für die magnetische Induktion verbunden ist mit einer Auswertungseinheit (41) zur Messung des Magnetfelds, die zur Ableitung der räumlichen Lokalisierung der Querrichtung (11, 110, 111) und/oder des bestimmten Richtungssinnes (12, 112) aus der Magnetfeldmessung angeordnet ist.

20. Vorrichtung nach einem der Ansprüche 16 bis 19,
**dadurch gekennzeichnet**,
daß sie im Fall von im Querschnitt polygonalen Hülsen (5B, 5C) eine Führungseinrichtung (17B) umfaßt, die zur Kontaktnahme mit zumindest einer Fläche (23) der Hülsen (5B, 5C) angeordnet ist, um deren Drehung um die Seillängsachse zu steuern, wobei die Führungseinrichtung (17B) gegebenenfalls motorbetrieben und an die Meß-Auswertungseinheit (41) angeschlossen ist, die gegebenenfalls zur Betätigung der Führungseinrichtung vorgesehen ist.

21. Vorrichtung nach einem der Ansprüche 16 bis 19,
**dadurch gekennzeichnet**,
daß für die Änderung der Querrichtung (11, 110, 111) und/oder des Richtungssinnes (12, 112), insbesondere durch Relativverlagerung zwischen dem Diamantseil (1) und der genannten Wand (16), zumindest eine Hilfs-Seilscheibe (141) und eine Einrichtung zur Änderung der Lage und/oder Ausrichtung der Drehachse der Hilfs-Seilscheibe vorgesehen sind, wobei die Änderungseinrichtung eventuell motorbetrieben und an die Meß-Auswertungseinheit (41) angeschlossen ist, die gegebenenfalls zur Betätigung der Änderungseinrichtung vorgesehen ist.

22. Vorrichtung nach Anspruch 21,
**dadurch gekennzeichnet**,
daß die Hilfs-Seilscheibe eine vertikale Drehachse aufweist und daß sie dabei derart angeordnet ist, daß sie im Verlauf des Schnittes längs dieser feststehenden Achse der Vertikalverschiebung eines Seiltrums (20) folgt, daß ihm zugeordnet ist.

23. Vorrichtung nach Anspruch 22,
**dadurch gekennzeichnet**,
daß die Seilscheibe (6, 7) durch eine Änderungseinrichtung (45) längs ihrer zu sich selbst parallel beweglichen Horizontalachse (9) derart verstellbar ist, daß der Kontakt zwischen der Flanke (17) der Seilscheibe (6, 7) und dem zugeordneten Abschnitt des Seiltrums (21) verändert wird.

24. Vorrichtung nach Anspruch 22 oder 23,
**dadurch gekennzeichnet**,
daß sie eine weitere Hilfs-Seilscheibe mit vertikaler Achse aufweist, die zwischen der Seilscheibe (6, 7) und der genannten Hilfs-Seilscheibe angeordnet ist, dabei selbst nahe dem zu sägenden Block (3) liegt und bezüglich der genannten Hilfs-Seilscheibe auf der anderen Seite des zugeordneten Seiltrums (20) angeordnet ist, und daß die weitere Hilfs-Seilscheibe vorzugsweise derart montiert ist, daß sie ebenfalls dem vertikalen Lauf des Seiltrums (20) folgen kann, sowie derart, daß sie längs einer Horizontalrichtung senkrecht zu dem Seiltrum (20) durch die Einrichtung zur Änderung der Lage und/oder der Ausrichtung der Drehachse der genannten Hilfs-Seilscheibe verstellt werden kann.

**Fig.1**

**Fig.3**

**Fig.4**

**Fig.5**

**Fig.6**

**Fig.7**

Fig.2

Fig.14

18

Fig.8

Fig.9

**Fig.10**

**Fig.11**

**Fig.12**

**Fig.13**

EP 0 699 113 B1